# EUROPÄISCHE PATENTSCHRIFT

(11) **EP 3 351 854 B1**
(45) Veröffentlichungstag und Bekanntmachung des Hinweises auf die Patenterteilung: **04.08.2021**
(21) Anmeldenummer: 17401126.2
(22) Anmeldetag: 07.12.2017
(51) Int. Cl.: F23R 3/14, F23R 3/28, F23D 11/38, F23D 11/26

(54) **BRENNKAMMER EINER GASTURBINE, GASTURBINE UND VERFAHREN ZUM BETREIBEN DERSELBEN**
COMBUSTION CHAMBER OF A GAS TURBINE, GAS TURBINE AND METHOD FOR OPERATING THE SAME
CHAMBRE DE COMBUSTION D'UNE TURBINE À GAZ, TURBINE À GAZ ET SON PROCÉDÉ DE FONCTIONNEMENT

(30) Priorität: 23.01.2017 DE 102017101167
(43) Veröffentlichungstag der Anmeldung: 25.07.2018
(73) Patentinhaber: MAN Energy Solutions SE, 86153 Augsburg (DE)
(72) Erfinder: Reiß, Frank, 79787 Lauchringen (DE); Cosic, Bernhard, 40225 Düsseldorf (DE)

(56) Entgegenhaltungen:
- EP-A1- 1 033 536
- DE-A1-102008 037 480
- US-A- 2 603 535
- US-A- 3 121 996
- US-A- 3 788 067

## Beschreibung

Die Erfindung betrifft eine Brennkammer einer Gasturbine, eine Gasturbine mit einer solchen Brennkammer und ein Verfahren zum Betreiben einer solchen Gasturbine. Gasturbinen verfügen über eine Brennkammer sowie über eine der Brennkammer nachgeordnete Turbine. In der Brennkammer einer Gasturbine wird ein Kraftstoff verbrannt und hierbei heißes Abgas erzeugt. Das heiße Abgas wird in der Turbine der Gasturbine entspannt, um hierbei Energie zu gewinnen, die dazu dienen kann, Antriebsleistung bereitzustellen, um z.B. zur Erzeugung von elektrischem Strom einen Generator anzutreiben. Aus der Praxis sind bereits als Dual-Fuel-Gasturbinen ausgebildete Gasturbinen bekannt, wobei solche Dual-Fuel-Gasturbinen eine Dual-Fuel-Brennkammer umfassen, in der in einem Gaskraftstoffbetriebsmodus ein gasförmiger Kraftstoff und in einem Flüssigkraftstoffbetriebsmodus ein flüssiger Kraftstoff verbrannt wird. In dem Gaskraftstoffbetriebsmodus ist ein Gemisch aus einem gasförmigen Kraftstoff und Verbrennungsluft über einen Diffusor der Brennkammer zuführbar. In dem Flüssigkraftstoffbetriebsmodus ist der Brennkammer der Gasturbine der flüssige Kraftstoff über eine Brennstoff-Lanze und die Verbrennungsluft über den Drallkörper zuführbar.

Es besteht Bedarf daran, als Dual-Fuel-Brennkammern ausgebildete Brennkammern einer Gasturbine dahingehend weiter zu verbessern, dass insbesondere im Flüssigkraftstoffbetriebsmodus der flüssige Kraftstoff effektiver verbrannt werden kann, und zwar unter Reduzierung von unerwünschten Abgasemissionen wie Stickoxidemissionen.

Beispielsweise ist aus dem Dokument DE 10 2008 037 480 A1 und der Schrift US 2,603,535 A jeweils eine Dual-Fuel-Gasturbine bekannt, von welchen erstgenannte auch eine zusätzliche Zuführung von Luft im Flüssigkraftstoffbetriebsmodus vorsieht. Eine weitere Dual-Fuel Brennkammer ist aus der US3121996 bekannt.

Hiervon ausgehend liegt der vorliegenden Erfindung die Aufgabe zugrunde, eine neuartige Brennkammer einer Gasturbine, eine Gasturbine einer solchen Brennkammer und ein Verfahren zum Betreiben einer solchen Gasturbine zu schaffen.

Diese Aufgabe wird durch eine Brennkammer einer Gasturbine nach Anspruch 1 gelöst.

Erfindungsgemäß ist die Brennstoff-Lanze unter Ausbildung eines Radialspalts radial außen von einer angrenzenden Lanzen-Kappe zumindest abschnittsweise umgeben, wobei der Brennkammer über den Radialspalt Verbrennungsluft unter Umgehung des Drallkörpers zuführbar ist. Mit Hilfe der Verbrennungsluft, die der Brennkammer über den zwischen der Brennstoff-Lanze und der angrenzenden Lanzen-Kappe ausgebildeten Radialspalt zuführbar ist, kann die Brennstoff-Lanze gekühlt werden. Ferner umgibt diese Luft im Flüssigkraftstoffbetriebsmodus den an der Brennstoff-Lanze erzeugten Zerstäubungskegel des flüssigen Kraftstoffs außen zumindest abschnittsweise. Letztendlich kann hiermit im Flüssigkraftstoffbetriebsmodus flüssiger Kraftstoff effektiver unter Reduzierung von Abgasemissionen wie Stickoxidemissionen verbrannt werden.

Nach einer Weiterbildung der Erfindung beträgt die Verbrennungsluftströmung, welche der Brennkammer unter Umgehung des Drallkörpers über den Radialspalt zwischen der Brennstoff-Lanze und der angrenzenden Lanzen-Kappe zuführbar ist, zwischen 1% und 10% der Verbrennungsluftströmung, welche der Brennkammer über den Drallkörper zuführbar ist. Dann, wenn der über den Radialspalt geführte Verbrennungsluftstrom 1% bis 10% des über den Drallkörper geführten Verbrennungsluftstroms beträgt, kann einerseits im Flüssigkraftstoffbetriebsmodus und andererseits auch im Gaskraftstoffbetriebsmodus eine effektive Verbrennung des jeweiligen Kraftstoffs unter Reduzierung von insbesondere Stickoxidemissionen gewährleistet werden. Im Flüssigkraftstoffbetriebsmodus wird, wie bereits oben ausgeführt, die Brennstoff-Lanze gekühlt, ferner umgibt der über den Radialspalt geführte Luftstrom den Zerstäubungskegel zumindest abschnittsweise und bündelt so denselben.

Nach einer Weiterbildung der Erfindung ist der Brennkammer sowohl im Gaskraftstoffbetriebsmodus als auch im Flüssigkraftstoffbetriebsmodus Verbrennungsluft über den Radialspalt zwischen der Brennstoff-Lanze und der angrenzenden Lanzen-Kappe zuführbar. In beiden Betriebsmodi kann über die Verbrennungsluft, die über den Radialspalt der Brennkammer zuführbar ist, eine optimale Verbrennung des jeweiligen Kraftstoffs gewährleistet werden.

Nach einer Weiterbildung der Erfindung weist die Brennstoff-Lanze mindestens eine, vorzugsweise zwei, Zerstäubungsdüsen auf, die abhängig von der Last der Gasturbine zuschaltbar sind und die alleine und gemeinsam jeweils einen Zerstäubungskegel mit einem maximalen Sprühwinkel von 60° bereitstellen. Auch die Ausbildung eines derartigen maximalen Sprühwinkels ist für eine effektive Verbrennung des flüssigen Kraftstoffs im Flüssigkraftstoffbetriebsmodus unter Reduzierung von insbesondere Stickoxidemissionen von Vorteil.

Die erfindungsgemäße Gasturbine ist in Anspruch 7 und das erfindungsgemäße Verfahren zum Betreiben derselben ist in Anspruch 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

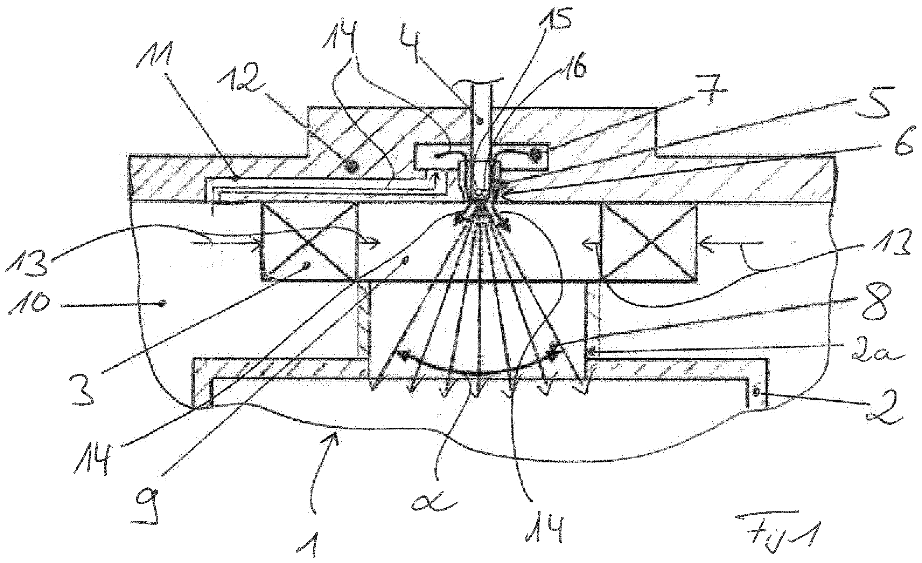

- Fig. 1: einen stark schematisierten Ausschnitt aus einer erfindungsgemäßen Brennkammer einer Gasturbine.

Die Erfindung betrifft eine Brennkammer einer Gasturbine, eine Gasturbine mit einer solchen Brennkammer und ein Verfahren zum Betreiben einer solchen Gasturbine.

Fig. 1 zeigt einen schematisierten Ausschnitt aus einer Gasturbine im Bereich einer Brennkammer 1. Die Brennkammer 1 wird von einer Wand 2 begrenzt, wobei in der Brennkammer 1 ein Kraftstoff verbrannt wird. Bei der Verbrennung des Kraftstoffs in der Brennkammer 1 entstehendes Abgas ist einer nicht gezeigten Turbine der Gasturbine zuführbar, um das Abgas in der Turbine zu entspannen und hierbei Energie zu gewinnen.

Die Brennkammer 1 ist als Dual-Fuel-Brennkammer ausgebildet, die einerseits in einem Gaskraftstoffbetriebsmodus und andererseits in einem Flüssigkraftstoffbetriebsmodus betrieben werden kann. Im Gaskraftstoffbetriebsmodus der Brennkammer 1 wird in derselben ein gasförmiger Kraftstoff verbrannt, wobei ein Gemisch aus dem gasförmigen Kraftstoff und Verbrennungsluft der Brennkammer 1, in Fig. 1 einem Mischraum 9 der Brennkammer 1, über einen Drallkörper 3 zugeführt wird. Der Drallkörper 3 ist vorzugsweise als radialer Drallkörper ausgeführt und erzeugt einen definierten Drall des in den Mischraum 9 der Brennkammer 1 eintretenden Gemischs aus Verbrennungsluft und gasförmigem Kraftstoff. Das Gemisch aus dem gasförmigen Kraftstoff und der Verbrennungsluft wird im Gaskraftstoffbetriebsmodus mit Hilfe einer nicht gezeigten elektrischen Zündeinrichtung gezündet.

Im Flüssigkraftstoffbetriebsmodus der Brennkammer 1 wird in derselben ein flüssiger Kraftstoff verbrannt, wobei der flüssige Kraftstoff der Brennkammer 1, in Fig. 1 des Mischraumes 9 der Brennkammer 1, mit Hilfe einer Brennstoff-Lanze 4 zugeführt wird. Die Brennstoff-Lanze 4 sitzt etwa in der Mitte des Mischraumes 9 und spritzt den flüssigen Kraftstoff in Axialrichtung unter Zerstäubung desselben und unter Ausbildung eines Zerstäubungskegels bzw. Sprühkegels 8 in den Mischraum 9 der Brennkammer 1 ein. Im Flüssigkraftstoffbetriebsmodus wird zur Verbrennung des flüssigen Kraftstoffs benötigte Verbrennungsluft wiederum über den Drallkörper 3 des Mischraumes 9 zugeführt, und zwar wiederum unter Ausbildung einer definierten Drallströmung. Auch im Flüssigkraftstoffbetriebsmodus kann bei Bedarf die nicht gezeigte elektrische Zündeinrichtung genutzt werden.

Zwischen der Brennstoff-Lanze 4, die in einer Montagewand 12 aufgenommen ist, und einer angrenzenden Lanzen-Kappe 5, welches ebenfalls in der Montagewand 12 aufgenommen ist, sich radial außen an die Brennstoff-Lanze 4 anschließt und die Brennstoff-Lanze 4 radial außen zumindest abschnittsweise umgibt, ist ein Radialspalt 6 ausgebildet, über den zusätzlich Verbrennungsluft der Brennkammer 1, nämlich der Mischraum 9, unter Umgehung des Drallkörpers 3 zugeführt werden kann.

In Fig. 1, welche die Brennkammer 1 im Flüssigkraftstoffbetriebsmodus zeigt, ist der von der Brennstoff-Lanze 4 ausgebildete Zerstäubungskegel 8 des zerstäubten flüssigen Kraftstoffs gezeigt. Diejenige Verbrennungsluft, die dem Mischraum 9 der Brennkammer 1 über den Drallkörper 3 zugeführt wird, ist in Fig. 1 durch Pfeile 13 visualisiert. Diejenige Verbrennungsluft, die unter Umgehung des Drallkörpers 3 der Mischraum 9 über den Radialspalt 6 zwischen der Brennstoff-Lanze 4 und der angrenzenden Lanzen-Kappe 5 zuführbar ist, ist in Fig. 1 durch Pfeile 14 gekennzeichnet.

In einer bevorzugten Ausführungsform ist die sich radial außen an die Brennstoff-Lanze 4 angrenzende Lanzen-Kappe 5, welche zusammen mit der Brennstoff-Lanze 4 den Radialspalt 6 definiert, als Hülse ausgebildet, die über Stege mit der Brennstoff-Lanze 4 verbunden ist. Es ist auch möglich, dass die Montagewand 12 selbst die sich radial außen an die Brennstoff-Lanze 4 angrenzende Lanzen-Kappe 5, welche den Radialspalt 6 zusammen mit der Brennstoff-Lanze 4 definiert, bereitstellt.

Diejenige Verbrennungsluft 14, welche der Brennkammer 1, in Fig. 1 dem Mischraum 9, unter Umgehung des Drallkörpers 3 über den Radialspalt 6 zwischen der Brennstoff-Lanze 4 und der angrenzenden Lanzen-Kappe 5 zuführbar ist, beträgt zwischen 1% und 10% der Verbrennungsluft, welche der Brennkammer 1, in Fig. 1 dem Mischraum 9, über den Drallkörper 3 zuführbar ist.

Die Luftströmung 14, die über den Radialspalt 6 oder lokale Bohrungen geführt wird, kühlt einerseits die Brennstoff-Lanze 4, andererseits umgibt dieselbe zumindest teilweise außen den Sprühkegel 8 des flüssigen Kraftstoffs im Flüssigkraftstoffbetriebsmodus und bündelt so denselben.

Über den Radialspalt 6 ist die Verbrennungsluftströmung 14 nicht nur im Flüssigkraftstoffbetriebsmodus der Brennkammer 1, in Fig. 1 dem Mischraum 9 derselben, zuführbar, sondern auch im Gaskraftstoffbetriebsmodus, wobei im Gaskraftstoffbetriebsmodus die Brennstoff-Lanze 4 inaktiv ist, sodass über dieselbe im Gaskraftstoffbetriebsmodus kein Kraftstoff in die Brennkammer 1 eingebracht wird.

Im Gaskraftstoffbetriebsmodus wird demnach das Gas-Verbrennungsluft-Gemisch über den Drallkörper 3 geführt. Ebenfalls wird im Gaskraftstoffbetriebsmodus Verbrennungsluft über den Ringspalt 6 geführt. Die über den Ringspalt 6 geführte Verbrennungsluftströmung 14 wird im Bereich eines sogenannten Plenums 10 stromaufwärts des Drallkörpers 13 abgezweigt. Fig. 1 zeigt eine Luftleitung 11, über die vom Plenum 10 Luft abgezweigt werden kann, wobei die vom Plenum 10 über die Luftleitung 11 abgezweigte Verbrennungsluft 14 einer von der Wand 12 ausgebildeten Luftkammer 7 zugeführt wird, um dann ausgehend von dieser Luftkammer 7 über den zwischen der Brennstoff-Lanze 4 und der angrenzenden Lanzen-Kappe 5 ausgebildeten Radialspalts 6 in die Mischraum 9 der Brennkammer 1 eingebracht zu werden.

Die Brennstoff-Lanze 4 verfügt über mindestens eine oder zwei Zerstäubungsdüsen 15, 16. Es ist möglich, beide Zerstäubungsdüsen 15, 16 gleichzeitig oder überlappend zu nutzen, andererseits ist es auch möglich, jeweils nur eine dieser Zerstäubungsdüsen 15, 16 zu nutzen.

Unabhängig davon, wie viele der Zerstäubungsdüsen 15, 16 genutzt werden, um im Flüssigkraftstoffbetriebsmodus den flüssigen Kraftstoff zu zerstäuben und in die Brennkammer 1 einzubringen, beträgt der maximale Sprühwinkel α des Zerstäubungskegels 8 des flüssigen Kraftstoffs maximal 60°.

Dann, wenn die Brennkammer 1 im Flüssigkraftstoffbetriebsmodus mit aktiver Brennstoff-Lanze 4 betrieben wird, ist vorgesehen, dass im Leerlauf sowie bei Lasten der Gasturbine, die kleiner als ein Grenzwert sind, die erste Zerstäubungsdüse 15 zugeschaltet wird. Dann, wenn die Last der Gasturbine größer als der Grenzwert ist, wird vorzugsweise auch die zweite Zerstäubungsdüse 16 zugeschaltet. Die Zerstäubungsdüsen 15, 16 sind demnach abhängig von der Last der Gasturbine zuschaltbar bzw. aktivierbar.

Die Brennstoff-Lanze 4 ist, wie oben ausgeführt, vorzugsweise mittig zum Mischraum 9 oder Brennkammer 1 ausgerichtet und zerstäubt den flüssigen Kraftstoff im Flüssigkraftstoffbetriebsmodus in den Mischraum 9 und Brennkammer 1 hinein, und zwar unter Ausbildung eines Zerstäubungskegels 8, dessen Sprühwinkel maximal 60° beträgt.

Zumindest im Flüssigkraftstoffbetriebsmodus und vorzugsweise auch im Gaskraftstoffbetriebsmodus wird ein Teil der Verbrennungsluft des Mischraumes 9 über den Radialspalt 6 unter Umgehung des Drallkörpers 3 zugeführt, wobei der Radialspalt 6 zwischen der Brennstoff-Lanze 4 und einer angrenzenden Lanzen-Kappe, insbesondere einer die Brennstoff-Lanze 4 radial außen zumindest abschnittsweise umgebenden Hülse, ausgebildet ist. Mit diesem über den Radialspalt 6 geführten Luftstrom 14 wird einerseits die Brennstoff-Lanze 4 gekühlt, andererseits wird der Zerstäubungskegel 8 im Flüssigkraftstoffbetriebsmodus gebündelt. Im Gaskraftstoffbetriebsmodus kann durch die über den Radialspalt 6 geführte Luftströmung 14 ebenfalls die Verbrennung des nunmehr gasförmigen Kraftstoffs positiv beeinflusst werden.

Dadurch, dass im Flüssigkraftstoffbetriebsmodus der über den Radialspalt 6 geführte Luftstrom den Sprühkegel 8 führt bzw. bündelt bzw. außen umgibt, wird verhindert, dass flüssiger, zerstäubter Kraftstoff die Wand 2 der Brennkammer 1, insbesondere einen sich zwischen der eigentlichen Brennkammer 1 und dem Mischraum 9 erstreckende Vormischkammer 2a der Wand 2, benetzt. Hiermit kann die Vormischkammer 2a der Wand 2 der Brennkammer 1 vor Beschädigung geschützt werden.

### Bezugszeichenliste

- 1: Brennkammer
- 2: Wand
- 2a: Vormischkammer
- 3: Drallkörper
- 4: Brennstoff-Lanze
- 5: Lanzen-Kappe
- 6: Radialspalt
- 7: Luftraum
- 8: Zerstäubungskegel
- 9: Mischraum
- 10: Luftraum / Plenum
- 11: Luftleitung
- 12: Wand
- 13: Verbrennungsluftströmung
- 14: Verbrennungsluftströmung
- 15: Zerstäubungsdüse
- 16: Zerstäubungsdüse

## Patentansprüche

1. Brennkammer (1) einer Gasturbine, zur Verbrennung eines Kraftstoffs unter Anwesenheit von Verbrennungsluft, wobei die Brennkammer (1) als Dual-Fuel-Brennkammer ausgebildet ist, der in einem Gaskraftstoffbetriebsmodus ein Gemisch aus einem gasförmigen Kraftstoff und Verbrennungsluft über einen Drallkörper (3) zuführbar ist, und der in einem Flüssigkraftstoffbetriebsmodus über eine Brennstoff-Lanze (4) ein flüssiger Kraftstoff und über den Drallkörper (3) Verbrennungsluft zuführbar ist, wobei die Brennstoff-Lanze (4) in einer Montagewand (12) aufgenommen ist und unter Ausbildung eines Radialspalts (6) radial außen von einer angrenzenden Lanzen-Kappe (5) zumindest abschnittsweise umgeben ist, welche ebenfalls in der Montagewand (12) aufgenommen ist, wobei in der Montagewand (12) eine Luftkammer (7) ausgebildet ist, welcher Verbrennungsluft (14) die vom Plenum (10) abgezweigt wird über eine Luftleitung (11) zugeführt wird, wobei einem Mischraum der Brennkammer (1) ausgehend von der Luftkammer (7) über den Radialspalt (6) Verbrennungsluft unter Umgehung des Drallkörpers (3) zuführbar ist,
und wobei der Radialspalt (6) zwischen der Brennstoff-Lanze (4) und der angrenzenden Lanzen-Kappe (5) ausgebildet ist, wobei insbesondere die Lanzenkappe als eine die Brennstoff-Lanze (4) radial außen zumindest abschnittsweise umgebenden Hülse ausgebildet ist,
und wobei der Radialspalt (6) ausgebildet ist, die Brennstoff-Lanze (4) über eine durch die Luftkammer (7) und den Radialspalt (6) entlang der Brennstoff-Lanze führende Luftströmung (14) zu kühlen. wobei die Brennkammer (1) den Mischraum (9) beinhaltet der sich radial innerhalb des Drallkörpers (3) befindet, und die Luftströmung (14) vom Radialspalt (6) dem Mischraum (9) der Brennkammer (1) zugeführt wird und wobei sich zwischen der Brennkammer und dem Mischraum eine Vormischkammer befindet.

2. Brennkammer nach Anspruch 1, **dadurch gekennzeichnet, dass** der Radialspalt (6) zwischen der Brennstoff-Lanze (4) und der angrenzenden Lanzen-Kappe (5) ausgebildet ist, der Brennkammer unter Umgehung des Drallkörpers (3) eine Verbrennungsluftströmung zuzuführen, welche zwischen 1% und 10% einer Verbrennungsluftströmung beträgt, welche der Brennkammer über den Drallkörper (3) zuführbar ist.

3. Brennkammer nach Anspruch 1 oder 2, **dadurch gekennzeichnet, dass** der Brennkammer sowohl im Gaskraftstoffbetriebsmodus als auch im Flüssigkraftstoffbetriebsmodus Verbrennungsluft über den Radialspalt (6) zwischen der Brennstoff-Lanze (4) und der angrenzenden Lanzen-Kappe (5) zuführbar ist.

4. Brennkammer nach einem der Ansprüche 1 bis 3, **dadurch gekennzeichnet, dass** die Brennstoff-Lanze (4) mindestens zwei, vorzugsweise zwei, Zerstäubungsdüsen (15, 16) aufweist, die abhängig von der Last der Gasturbine zuschaltbar sind.

5. Brennkammer nach einem der Ansprüche 1 bis 4, **dadurch gekennzeichnet, dass** die Brennstoff-Lanze (4) mindestens zwei, vorzugsweise zwei, Zerstäubungsdüsen (15, 16) aufweist, die alleine und gemeinsam ausgebildet sind, jeweils einen Zerstäubungskegel (8) mit einem maximalen Sprühwinkel von 60° bereitzustellen.

6. Gasturbine,
mit einer Brennkammer (1) nach einem der Ansprüche 1 bis 5 zur Verbrennung eines Kraftstoffs unter Anwesenheit von Verbrennungsluft,
mit einer Turbine zur Entspannung des bei der Verbrennung entstehenden Abgases.

7. Verfahren zum Betreiben einer Gasturbine nach Anspruch 6, **dadurch gekennzeichnet, dass**
der Brennkammer (1) in dem Gaskraftstoffbetriebsmodus ein Gemisch aus einem gasförmigen Kraftstoff und Verbrennungsluft über den Drallkörper (3) zugeführt wird,
der Brennkammer (1) in dem Flüssigkraftstoffbetriebsmodus über die Brennstoff-Lanze (4) ein flüssiger Kraftstoff und über den Drallkörper (3) Verbrennungsluft zugeführt wird,
der Brennkammer (1) in dem Gaskraftstoffbetriebsmodus und in dem Flüssigkraftstoffbetriebsmodus Verbrennungsluft zusätzlich über den Radialspalt (6) zwischen der Brennstoff-Lanze (4) und der angrenzenden Lanzen-Kappe (5) zugeführt wird und wobei der Radialspalt (6) zwischen der Brennstoff-Lanze (4) und der angrenzenden Lanzen-Kappe (5), insbesondere einer die Brennstoff-Lanze (4) radial außen zumindest abschnittsweise umgebenden Hülse, ausgebildet ist.

8. Verfahren nach Anspruch 7, **dadurch gekennzeichnet, dass** in dem Gaskraftstoffbetriebsmodus die Brennstoff-Lanze (4) inaktiv ist.

9. Verfahren nach Anspruch 7 oder 8, **dadurch gekennzeichnet, dass** in dem Flüssigkraftstoffbetriebsmodus der flüssige Kraftstoff über die Brennstoff-Lanze (4) der Brennkammer derart zugeführt wird, dass im Leerlauf und bei Lasten, die kleiner als ein Grenzwert sind, die erste Zerstäubungsdüse zugeschaltet wird, wobei bei Lasten, die größer als ein Grenzwert sind, die zweite Zerstäubungsdüse zugeschaltet wird.

## Claims

1. A combustion chamber (1) of a gas turbine, for combusting a fuel in the presence of combustion air, wherein the combustion chamber (1) is designed as dual fuel combustion chamber, which in a gas fuel operating mode can be fed a mixture of a gaseous fuel and combustion air via a swirl body (3), and which in a liquid fuel, operating mode can be fed, via a fuel lance (4), a liquid fuel and via the swirl body (3), combustion air,
wherein the fuel lance (4) is received in a mounting wall (12) and, forming a radial gap (6) is surrounded radially outside by an adjoining lance cap (5) at least in sections, which is likewise received in the mounting wall (12),
wherein in the mounting wall (12) an air chamber (7) is formed, which is fed combustion air (14), which is branched off from the plenum (10), via an air line (11),
wherein, bypassing the swirl body (3), combustion air emanating from the air chamber (7) can be fed to a mixing chamber of the combustion chamber (1) via the radial gap (6),
and wherein the radial gap (6) is formed between the fuel lance (4) and the adjoining lance cap (5), wherein in particular the lance cap is designed as a sleeve surrounding the fuel lance (4) radially outside at least in sections,
and wherein the radial gap (6) is designed to cool the fuel lance (4) via an air flow (14) leading through the air chamber (7) and the radial gap (6) along the fuel lance,
wherein the combustion chamber (1) contains the mixing chamber (9) which is located radially within the swirl body (3), and the air flow (14) is fed from the radial gap (6) to the mixing chamber (9) of the combustion chamber (1) and wherein between the combustion chamber and the mixing chamber a premixing chamber is located.

2. The combustion chamber according to Claim 1, **characterized in that** the radial gap (6) between the fuel lance (4) and the adjoining lance cap (5) is designed to feed a combustion air flow to the combustion chamber bypassing the swirl body (3), which combustion air flow amounts to between 1 % and 10 % of a combustion air flow, which can be fed to the combustion chamber via the swirl body (3).

3. The combustion chamber according to Claim 1 or 2, **characterized in that** the combustion chamber, both in the gas fuel operating mode and also in the liquid fuel operating mode, can be fed combustion air via the radial gap (6) between the fuel lance (4) and the adjoining lance cap (5).

4. The combustion chamber according to any one of the Claims 1 to 3, **characterized in that** the fuel lance (4) comprises at least two, preferentially two atomisation nozzles (15, 16) which can be activated dependent the load of the gas turbine.

5. The combustion chamber according to any one of the Claims 1 to 4, **characterized in that** the fuel lance (4) comprises at least two, preferentially two atomisation nozzles (15, 16) which are designed solely and jointly, to each provide an atomisation cone (8) with a maximum spray angle of 60°.

6. A gas turbine,
having a combustion chamber (1) according to any one of the Claims 1 to 5 for combusting a fuel in the presence of combustion air,
having a turbine for expanding the exhaust gas produced during the combustion.

7. A method for operating a gas turbine according to Claim 6, **characterized in that**
the combustion chamber (1), in the gas fuel operating mode, is fed a mixture of a gaseous fuel and combustion air via the swirl body (3),
the combustion chamber (1), in the liquid fuel operating mode, is fed a liquid fuel via the fuel lance (4) and combustion air via the swirl body (3),
the combustion chamber (1) in the gas fuel operating mode and in the liquid fuel operating mode is additionally fed combustion air via the radial gap (6) between the fuel lance (4) and the adjoining lance cap (5) and wherein the radial gap (6) is formed between the fuel lance (4) and the adjoining lance cap (5), in particular a sleeve surrounding the fuel lance (4) radially outside at least in sections.

8. The method according to Claim 7, **characterized in that** in the gas fuel operating mode the fuel lance (4) is inactive.

9. The method according to Claim 7 or 8, **characterized in that** in the liquid fuel operating mode the liquid fuel is fed to the combustion chamber via the fuel lance (4) in such a manner that at idle and under loads, which are smaller than a limit value, the first atomisation nozzle is activated, wherein under loads, which are greater than a limit value, the second atomisation nozzle is activated.

## Revendications

1. Chambre de combustion (1) d'une turbine à gaz pour la combustion d'un combustible en présence d'air de combustion, dans laquelle la chambre de combustion (1) est conçue comme une chambre de combustion bicombustible, dans laquelle un mélange d'un combustible gazeux et d'air de combustion peut être alimenté via un corps de tourbillonnement (3), et dans laquelle l'air de combustion peut être alimenté dans un mode de fonctionnement à combustible liquide via une lance à combustible (4) et via le corps de tourbillonnement (3),
dans laquelle la lance à combustible (4) est logée dans une paroi de montage (12) et est entourée au moins en sections par un capuchon de lance adjacent (5) formant une fente radiale (6), qui est également logé dans la paroi de montage (12),
dans laquelle une chambre à air (7) est formée dans la paroi de montage (12), lequel air de combustion (14) qui est dérivé du plénum (10) est alimenté via une conduite d'air (11),
dans laquelle dans un espace de mélange de la chambre de combustion (1) partant de la chambre à air (7) de l'air de combustion peut être introduit via la fente radiale (6), en contournant le corps de tourbillonnement (3),
et dans laquelle la fente radiale (6) est formée entre la lance à combustible (4) et le capuchon de lance adjacent (5), dans laquelle en particulier le capuchon de lance en tant qu'une des lances à combustible (4) est formé radialement à l'extérieur du manchon entourant au moins partiellement,
et dans laquelle la fente radiale (6) est formée, pour refroidir la lance à combustible (4) via un flux d'air (14) menant à travers la chambre à air (7) et la fente radiale (6) le long de la lance à combustible,
dans laquelle la chambre de combustion (1) contient la chambre de mélange (9) qui est située radialement à l'intérieur du corps de tourbillonnement (3), et le flux d'air (14) est alimenté de la fente radiale (6) dans l'espace de mélange (9) de la chambre de combustion (1) et dans laquelle une chambre de pré-mélange est située entre la chambre de combustion et l'espace de mélange.

2. Chambre de combustion selon la revendication 1, **caractérisée en ce que** la fente radiale (6) entre la lance à combustible (4) et le capuchon de lance attenant (5) est destiné à alimenter la chambre de combustion en contournant le corps de tourbillonnement (3) avec un débit d'air de combustion compris entre 1 % et 10 % d'un flux d'air de combustion, qui peut être alimenté dans la chambre de combustion via le corps de tourbillonnement (3).

3. Chambre de combustion selon la revendication 1 ou 2, **caractérisée en ce que** dans la chambre de combustion tant en mode de fonctionnement à gaz combustible qu'en mode de fonctionnement à combustible liquide de l'air de combustion peut être alimentée via la fente radiale (6) entre la lance de combustible (4) et le capuchon de lance attenant (5).

4. Chambre de combustion selon une des revendications 1 à 3, **caractérisée en ce que** la lance à combustible (4) comporte au moins deux, de préférence deux, buses d'atomisation (15, 16) qui peuvent être enclenchées en fonction de la charge de la turbine à gaz.

5. Chambre de combustion selon une des revendications 1 à 4, **caractérisée en ce que** la lance à combustible (4) comporte au moins deux, de préférence deux, buses d'atomisation (15, 16) qui sont conçues seules et ensemble, chacune ayant un cône d'atomisation (8) avec un angle d'atomisation maximal de 60°.

6. Turbine à gaz,
comportant une chambre de combustion (1) selon une des revendications 1 à 5 pour la combustion d'un combustible en présence d'air de combustion,
comportant une turbine pour la détente des gaz d'échappement produits lors de la combustion.

7. Procédé de fonctionnement d'une turbine à gaz selon la revendication 6, **caractérisé en ce que**
la chambre de combustion (1) en mode de fonctionnement à gaz combustible est alimentée par un mélange d'un combustible gazeux et d'air de combustion via le corps de tourbillonnement (3),
la chambre de combustion (1) en mode de fonctionnement à combustible liquide est alimentée en combustible liquide via la lance à combustible (4) et l'air de combustion est alimenté via le corps de tourbillonnement(3),
la chambre de combustion (1) en mode de fonctionnement à combustible gazeux et en mode de fonctionnement à combustible liquide est en outre alimentée via la fente radiale (6) entre la lance à combustible (4) et le capuchon de lance attenant (5) et dans lequel la fente radiale (6) est formée entre la lance à combustible (4) et le capuchon de lance attenant (5), en particulier un manchon entourant au moins partiellement la lance à combustible (4) radialement vers l'extérieur.

8. Procédé selon la revendication 7, **caractérisé en ce que** la lance à combustible (4) est inactive en mode de fonctionnement à combustible gazeux.

9. Procédé selon la revendication 7 ou 8, **caractérisé en ce que** le combustible liquide est amené à la chambre de combustion via la lance à combustible (4) de manière à ce que la première buse d'atomisation soit mise en marche au ralenti et à des charges qui sont moindres qu'une valeur limite, dans lequel à des charges, qui sont supérieures à une valeur limite, la deuxième buse d'atomisation est activée pour des charges supérieures à une valeur limite.
